# EUROPEAN PATENT APPLICATION

(11) **EP 0 961 044 A2**
(43) Date of publication of application: **01.12.1999**
(21) Application number: 99304103.7
(22) Date of filing: 26.05.1999
(51) Int. Cl.: F16C 32/04

(54) **Magnetic bearing**

(30) Priority: 27.05.1998 JP 14614198
(71) Applicant: SEIKO SEIKI KABUSHIKI KAISHA, Narashino-shi Chiba (JP)
(72) Inventor: Shi, Yongwei, Narashino-shi, Chiba (JP)
(74) Representative: Sturt, Clifford Mark

(57) **Abstract**

A magnetic bearing whose axial length is shortened and whose control property is enhanced is provided. A rotor 1 has a hollow structure. A sensor mounting shaft 27 is fixed to a side end face 23 of an outer sleeve 21 by bolts 25. A radial position sensor 7 and a radial position sensor 9 are fixed to the sensor mounting shaft 27 so that their center positions are aligned with the center positions of a radial position controlling electromagnet 3 and a radial position controlling electromagnet 5, respectively. A metal disc 15 is provided at an end portion of the rotor 1. The metal disc 15 is provided between the two windings of the axial position controlling electromagnet 13 with a predetermined allowance. Also, a communication tube 35 is provided in an interior of the sensor mounting shaft 27.

## Description

### BACKGROUND OF THE INVENTION

### 1. Field of the Invention

The present invention relates to a magnetic bearing and more particularly to a magnetic bearing whose axial length is shortened and whose controlling property is enhanced.

### 2. Description of the Related Art

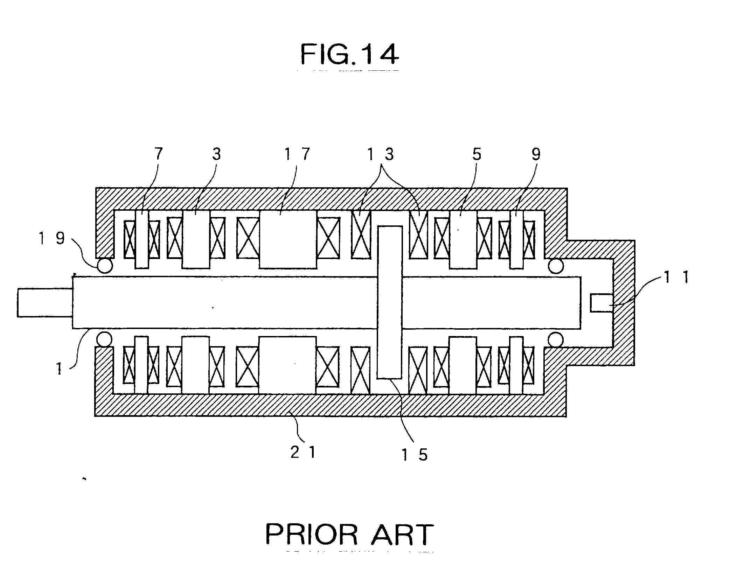

A structure of a conventional magnetic bearing is shown in Fig. 14 in which a rotor 1 is attracted to, and magnetically floated by, a radial position controlling electromagnet 3 and a radial position controlling electromagnet 5. The attractive force of the radial position controlling electromagnet 3 is controlled on the basis of a positional detection signal of the rotor 1 detected by a radial position sensor 7 (a gap amount between the rotor 1 and a stator). Also, the attractive force of the radial position controlling electromagnet 5 is controlled on the basis of a positional detection signal of the rotor 1 detected by a radial position sensor 9.

On the other hand, an axial position of the rotor 1 is detected by an axial position sensor 11. An axial position controlling electromagnet 13 is controlled on the basis of this positional detection signal. A metal disc 15 is attracted by the axial position controlling electromagnet 13 so that the rotor 1 is moved in the axial direction. The rotor 1 is then rotated at a high rate by a motor 17. A protective bearing 19 is provided for preventing the rotor 1 from coming into contact with each component when the bearing is inoperative or when the rotor 1 is rotated abnormally.

Here, in the arrangement of the conventional magnetic bearing, the radial position controlling electromagnet 3, the radial position controlling electromagnet 5, the radial position sensor 7, the radial position sensor 9, the axial position controlling electromagnet 13 and a motor 17 are fixed to an outer sleeve 21 along the axis of the rotor 1.

However, in the arrangement of the conventional magnetic bearing, since the radial position controlling electromagnet 3, the radial position sensor 7 and the like are arranged along the axis of the rotor 1, the length of the rotor 1 is elongated. For this reason, the natural frequency is lowered so that there is a fear that it would be difficult to rotate the rotor 1 at a super high rotational speed.

Also, since the installation positions of the radial position sensor 7 and the radial position sensor 9 are not aligned with the installation positions of the radial position controlling electromagnet 3 and the radial position controlling electromagnet 5, respectively, there is a problem in designing a controlling system of "no-collocation". For this reason, in the case where the bearing takes a resilient vibration mode due to the super high speed rotation, it is impossible or very difficult to control the bearing.

Furthermore, the axial position sensor 11 tends to be subjected to the affect caused by temperature change. Only one axial position sensor 11 is provided. It is therefore impossible to realize a temperature compensation function.

### SUMMARY OF THE INVENTION

In view of the foregoing defects, an object of the present invention is to provide a magnetic bearing whose axial length is shortened and whose controlling property is enhanced.

In order to attain this and other objects, according to the present invention, there is provided a magnetic bearing comprising: an outer sleeve; a sensor mounting shaft fixed to a central portion of a side end face of the outer sleeve; a motor and at least one position controlling electromagnet fixed to an inner wall of at least one of the outer sleeve and the side end face; a hollow rotor rotated by the motor and attracted for position alignment by the position controlling electromagnet; and at least one position sensor fixed to the sensor mounting shaft out of contact with the rotor inside the rotor for detecting at least one of an axial position and at least one radial position of the rotor.

The sensor mounting shaft is fixed to the central portion of the side end face of the outer sleeve. The position controlling electromagnet includes both a radial position controlling electromagnet and an axial position controlling electromagnet. The motor is of an high frequency type, an axial gap type to be described later, or the like. If the axial gap type motor is adopted, it is possible to fix this motor to the side end face of the outer sleeve. The rotor has a hollow structure and is rotated by the motor. Since the rotor has the hollow structure, the mass is concentrated away from the center to increase the inertia moment. Accordingly, the rigidity is increased. The rotor is attracted by the position controlling electromagnet and subjected to positional alignment. The position sensor detects at least one of the radial position and the axial position of the rotor. The radial position of the rotor is detected at least one point in the axial direction.

The position sensor is fixed to the sensor mounting shaft inside the rotor out of contact with the rotor. Since all the sensors including the temperature sensor and the velocity sensor in addition to the position sensors or almost all the sensors except a part of sensors provided on the side end face may be arranged on the sensor mounting shaft, it is possible to suppress any error caused in mounting the sensors.

Also, the wirings for the sensors may be aligned together. Furthermore, the sensors are inside the rotor and protected from the adverse affect of the strong magnetic field. Also, the interior of the rotor is filled with clean air or the like to avoid the adverse affect of noise. For this reason, the sensors have a long service life.

Also, the center position of the position controlling electromagnet and a center position of the position sensor are aligned with each other in an axial direction. Thus, it is possible to perform the positional control for the rotor in collocation. Also, the detecting point of the radial position is inside the rotor and the control point thereof is outside the rotor. The detecting point and the control point are very close to each other. Thus, it is possible to enhance the control precision.

Furthermore, the magnetic bearing according to the present invention is characterized in that the sensor mounting shaft is detachably fixed to the side end face of the outer sleeve by a mounting member.

The mounting member is a bolt, a screw or the like. The sensor mounting shaft is detachable. Almost all the sensors are mounted on the sensor mounting shaft. Accordingly, the assembling work may be facilitated. Also, the maintenance may be carried out at once.

Furthermore, the magnetic bearing according to the present invention is characterized in that the position sensor for detecting the axial position is provided with a first position sensor block around which windings are wound in the radial direction and a second position sensor block having the same structure as that of the first position sensor block and fixed at a predetermined interval in the axial direction so that the windings corresponding to the respective windings of the first position sensor block face to each other, and wherein a deviation in voltage generated between the second position sensor block and the first position sensor block is taken to thereby detect the axial position of the rotor.

The axial position detecting sensor includes the first position sensor block and the second position sensor block. The windings are laid around both the position sensor blocks in the radial direction. The first position sensor block and the second position sensor block are fixed at a predetermined interval in the axial direction so that the windings of the respective position sensor blocks face each other. The deviation of the voltage generated between the second position sensor block and the first position sensor block is taken to thereby detect the axial position of the rotor. Thus, by taking the deviation of the voltage, it is possible to offset the adverse affect to the windings due to the temperature generated in the first position sensor block and the second sensor block, respectively.

Furthermore, the magnetic bearing according to the present invention is characterized in that the position sensor for detecting the radial direction has windings radially wound and the windings symmetrically wound to sandwich the sensor mounting shaft are connected to form a bridge.

In the position sensor for detecting the radial position, the winding is laid in the radial direction. Then, the windings laid symmetrically and sandwiching the sensor mounting shaft are connected to form a bridge.

The distance between the rotor and the position sensor may be read out from the change of the inductance of the windings. By connecting the symmetrically wound windings to each other to form the bridge, it is possible to offset the adverse affect due to the temperature generated in each winding.

Furthermore, the magnetic bearing according to the present invention is characterized in that a communication tube for passing a coolant and/or a cable is arranged in an interior of the outer sleeve and/or the sensor mounting shaft.

Since almost all the sensors are provided on the sensor mounting shaft, the communication tube is provided in the interior of the sensor mounting shaft so that the cables may be arranged in an aligned manner. Also, if coolant such as water or air is caused to pass through the communication tube, the cooling effect is ensured. In this sense, if a like communication tube is provided in the outer sleeve, a synergetic effect is expected and the cooling effect is further emphasized. The sensor shaft is fixed to the central portion of the magnetic bearing. For this reason, the bearing may be homogeneously cooled from the center of the central portion thereof which is likely to be kept at a high temperature.

Furthermore, the magnetic bearing according to the present invention is characterized in that two position sensors for detecting the axial position are axially arranged at an interval and a deviation of outputs between the two position sensors is taken to measure a change of an axial length due to thermal expansion of the rotor.

The position sensors for detecting the axial position are axially arranged at two points. The reason why the positions sensors are provided at two points is that the distance between the two points of the rotor may be measured. By monitoring the thermal expansion of the rotor, it is possible to perform operations such as an alarm or stop in the case of any abnormality. By taking the deviation between the outputs of the position sensors at two points, it is possible to offset the adverse affect due to the temperature caused in the respective windings of the position sensors.

Furthermore, the magnetic bearing according to the present invention is characterized in that at least one out of the position sensors is embedded in the sensor mounting shaft.

Although the position sensor may be mounted on the outer portion of the sensor mounting shaft, it is possible to embed the sensor in the interior thereof. In particular, in the case where in order to detect the axial position of the rotor, the position sensor is fixed to the tip end of the sensor mounting shaft, it is possible to reduce the axial length of the magnetic bearing.

Furthermore, the magnetic bearing according to the present invention is characterized in that the position sensor for detecting the axial position is disposed by utilizing a space between the side end face of the outer sleeve and the rotor.

In general, a space is generated between the side end face of the outer sleeve and the rotor by the windings of the axial position controlling electromagnet. The position sensor for detecting the axial direction is disposed in this space. It is therefore possible to further reduce the axial length of the magnetic bearing.

### Brief Description of the Drawings

In the accompanying drawings:
Fig. 1 is a structural view showing a first embodiment of the present invention;
Fig. 2 is a simplified functional view showing a radial position sensor.
Fig. 3 is a circuit diagram showing the respective windings of the radial position sensor which are connected to form a bridge;
Fig. 4 is a structural view showing a second embodiment of the present invention;
Fig. 5 is a structural view showing a third embodiment of the present invention;
Fig. 6 is a structural view showing a fourth embodiment of the present invention;
Fig. 7 is a structural view showing a fifth embodiment of the present invention;
Fig. 8 is a frontal view showing a combination of two axial position sensors and a radial position sensor;
Fig. 9 is an exploded perspective view showing a combination of two axial position sensors and a radial position sensor;
Fig. 10 is a circuit diagram showing the state where the difference in change of inductance generated in the windings of the axial position sensors;
Fig. 11 is a structural view showing a sixth embodiment of the present invention;
Fig. 12 is a structural view showing a metal disc which is disposed in the midway of a rotor;

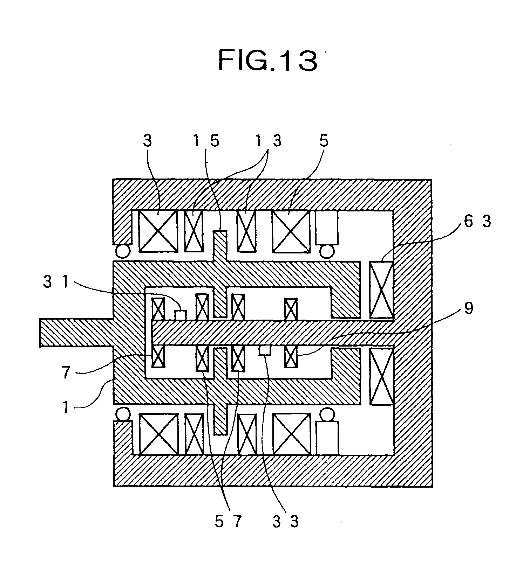

Fig. 13 is a structural view showing the state where the an axial gap type motor is utilized; and
Fig. 14 is a structural view showing a conventional magnetic bearing.

### DESCRIPTION OF THE PREFERRED EMBODIMENTS

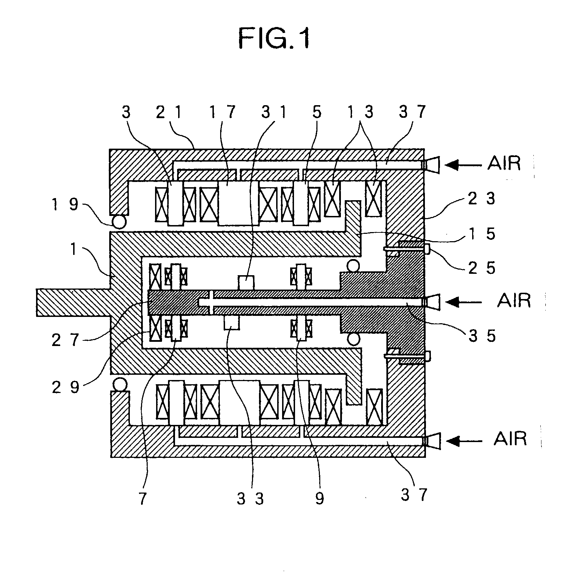

Embodiments of the present invention will now be described with reference to the accompanying drawings. A first embodiment of the present invention is shown in Fig. 1. Incidentally, the same reference numerals as those of Fig. 14 are used to represent the same or like components or members and explanation therefor will be omitted.

In Fig. 1, to an outer sleeve 21 are fixed a radial position controlling electromagnet 3, a radial position controlling electromagnet 5, a motor 17 and an axial position controlling electromagnet 13. A hollow rotor 1 that is rotated by magnetic floatation is disposed inside these electromagnets and the like.

Also, a sensor mounting shaft 27 is fixed to a side end face 23 of the outer sleeve 21 by bolts 25. The radial position sensor 7 and the radial position sensor 9 are fixed to this sensor mounting shaft 27 so that their center positions are aligned with center positions of the radial position controlling electromagnet 3 and the radial position controlling electromagnet 5, respectively. Also, an axial position sensor 29 is fixed to an end portion of the sensor mounting shaft 27. Furthermore, a velocity sensor 31 for detecting an rpm of the rotor 1 and a temperature sensor 33 for detecting a temperature within the magnetic bearing are mounted on the sensor mounting shaft 27.

A metal disc 15 is provided at an end portion of the rotor 1. The metal disc 15 is disposed between the windings of the axial position controlling electromagnet 13 with a predetermined allowance. Incidentally, inductance change type elements are used in the radial position sensor 7, the radial position sensor 9 and the axial position sensor 29. Also, a communication tube 35 is provided in the interior of the sensor mounting shaft 27. A communication tube 37 is provided in the interior of the outer sleeve 21.

The operation will now be described.

In such an arrangement, the radial position sensor 7, the radial position sensor 9, the axial position sensor 29, the velocity sensor 31 and the temperature sensor 33 are mounted on the sensor mounting shaft 27. Since the sensor mounting shaft 27 may readily be attached or detached by the bolts 25, it is easy to perform the maintenance or the assembling operation. In the conventional structure, as explained in conjunction with Fig. 14, since the windings have to be wound inside the sleeve-like stator, the winding work is troublesome. However, according to the present invention, since it is sufficient that the windings are wound around the outside of the stator fixed around the sensor mounting shaft 27, the winding work is facilitated.

Also, the center positions of the radial position sensor 7 and the radial position controlling electromagnet 3 are aligned with each other for achieving collocation. This is the case with respect to the radial position sensor 9 and the radial position controlling electromagnet 5. The detection point of the radial position is within the rotor 1 and the control point is outside the rotor 1. The detection point and the control point are very close to each other. Thus, it is possible to enhance the positional control precision.

On the other hand, the axial position of the rotor 1 is detected by the axial position sensor 29 and the two windings of the axial position controlling electromagnet 13 are controlled on the basis of this positional detection signal. Thus, the axial position of the rotor 1 is controlled.

Incidentally, since the rotor 1 has a hollow structure, the mass thereof is concentrated away from the center so that the inertia moment is increased. Accordingly, the rigidity is also high. For this reason, it is possible to apply this structure to a flywheel or the like.

Air is fed as coolant from the outside to the communication tubes 35 and 37. The sensor mounting shaft 27 is fixed to the central portion of the magnetic bearing. For this reason, it is possible to perform uniform cooling from the center of the central portion of the magnetic bearing which is likely to be kept at a high temperature. At the same time, since the cooling is effected also from the communication tube 37, it is possible to achieve further cooling. Also, it is possible to lay the wires needed for each sensor into the communication tubes 35 and 37 in a suitably aligned form. Furthermore, a Peltier element is arranged in advance in the communication tubes 35 and 37 so that each part may be cooled.

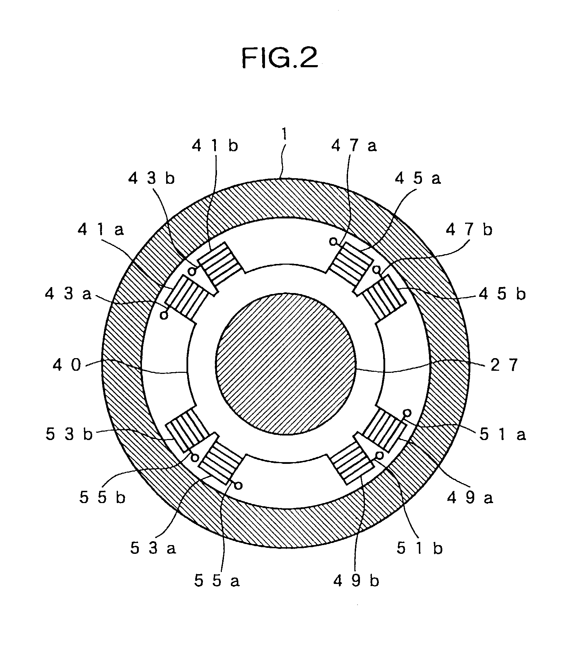

By the way, a simplified functional view of the radial position sensor 7 (same as in the radial position sensor 9) is shown in Fig. 2. The radial position sensor 7 is composed of a laminate steel plate in which a ring-shaped portion 40 and projections 41a, 41b, 45a, 45b, 49a, 49b, 53a and 53b are formed integrally with each other. The projections 41a and the like become an iron core of the electromagnet and are provided with windings 43a, 43b, 47a, 47b, 51a, 51b, 55a and 55b.

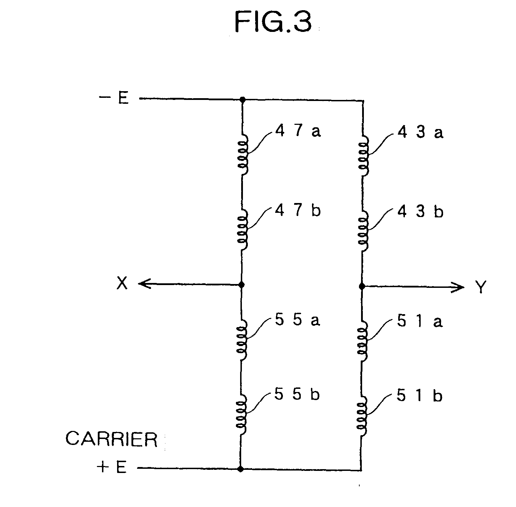

A bridge circuit for the windings is shown in Fig. 3. A difference between the distance between the projections 41a and 41b and the rotor 1 and the distance between the projections 49a and 49b and the rotor 1 (deviation in the Y-axis direction) is read out by picking up the difference of the inductance change between the windings 43a and 43b and the windings 51a and 51b. Thus, the bridge circuit is provided so that the change due to the temperature generated in the windings 43a and 43b and the windings 51a and 51b may be offset.

In the foregoing description, each position sensor is of the inductance change type. However, it is possible to use any one of an eddy current type, a photoelectric type, an electrostatic capacitance type, and a magnetic detection element type. Since almost no affect of the strong magnetic field is applied within the interior of the rotor 1, there is a small effect by noise caused by stray magnetic flux or the like. Also, in particular, in the case where the photoelectric type element is used, since the interior of the rotor 1 is filled with clean air or the like and is completely dark, the inside of the rotor 1 is almost free from the noise. Also, the sensor has a long service life.

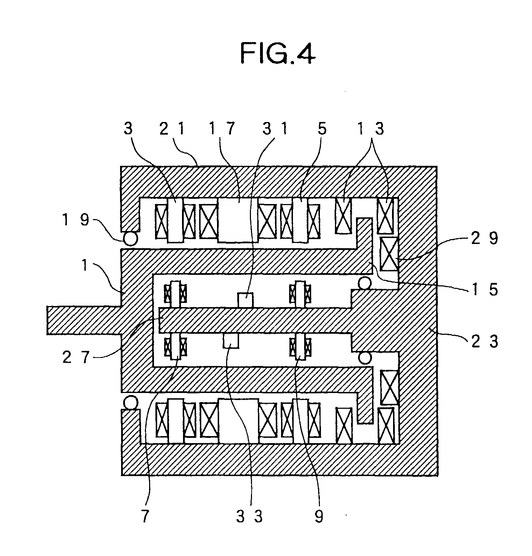

A second embodiment of the present invention will now be described with reference to Fig. 4. Incidentally, the same reference numerals as those of Figs. 1 and 14 are used to represent the same or like components or members and explanation therefor will be omitted. The structure of the fixture by the bolts 25 and the arrangement of the communication tubes 35 and 37 are the same as those shown in Fig. 1. These will be omitted. This is the case in each embodiment to be described later.

In Fig. 4, the axial position sensor 29 is mounted on the side end face 23 of the outer sleeve 21. A space is generated between the side end face 23 and the metal disc 15 for the thickness of the winding of the axial position controlling electromagnet 13. The axial position sensor 29 is disposed by utilizing this space. Thus, it is possible to further shorten the axial length of the magnetic bearing in comparison with the first embodiment.

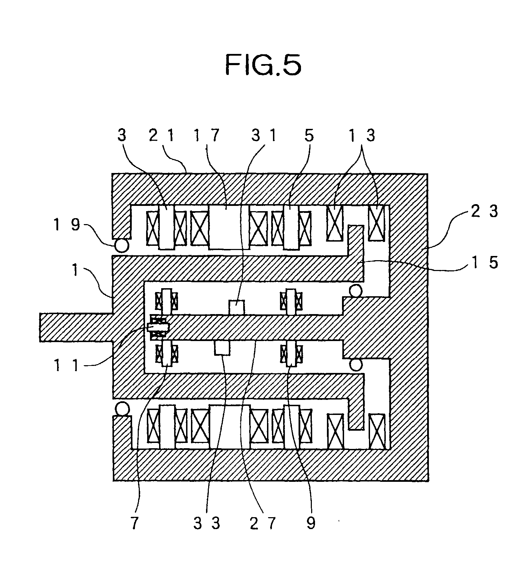

A third embodiment of the present invention will now be described with reference to Fig. 5. Incidentally, the same reference numerals as those of Figs. 1 and 14 are used to represent the same or like components or members and explanation therefor will be omitted.

In Fig. 5, the axial position sensor 11 is embedded in a tip end portion of the sensor mounting shaft 27. Thus, it is possible to shorten the axial length of the magnetic bearing by embedding the axial position sensor 11.

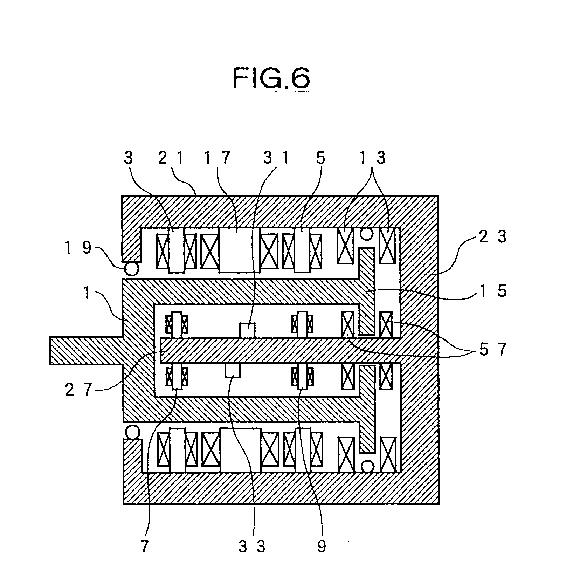

A fourth embodiment of the present invention will now be described with reference to Fig. 6. Incidentally, the same reference numerals as those of Figs. 1 and 14 are used to represent the same or like components or members and explanation therefor will be omitted.

In Fig. 6, the metal disc 15 is arranged so as to extend outwardly of the rotor 1 and at the same time to extend inwardly thereof. The metal disc portion extending outwardly is attracted by the axial position controlling electromagnet 13 and subjected to the axial positional control. Also, the metal disc portion extending inwardly is disposed between the two windings of the axial position sensor 57 with a predetermined allowance.

These two windings correspond to the first position sensor block and the second position sensor block, respectively. Then, the difference in voltage generated in these two windings is picked up to detect the axial position (not shown). At this time, it is possible to offset the correspondence to the inductance change caused by the temperature change generated in the respective windings. Accordingly, it is possible to detect the axial position without any affect due to the temperature.

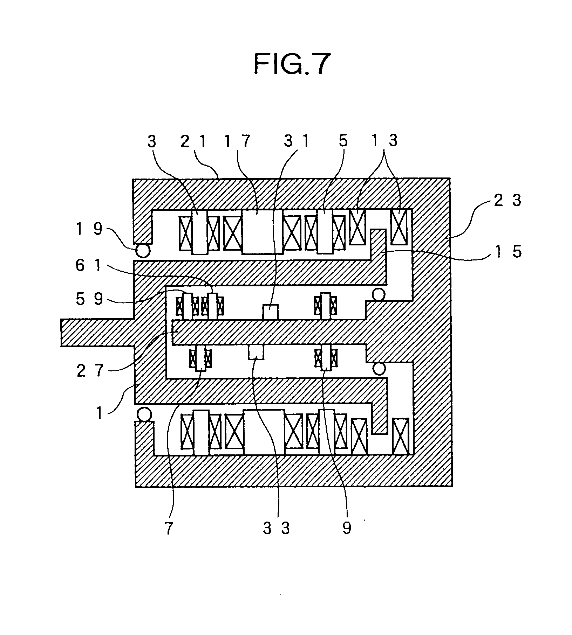

A fifth embodiment of the present invention will now be described with reference to Fig. 7. Incidentally, the same reference numerals as those of Figs. 1 and 14 are used to represent the same or like components or members and explanation therefor will be omitted.

In Fig. 7, the axial position sensor 59 and the axial position sensor 61 are arranged so that the center position of the two position sensors are aligned with the center position of the radial position controlling electromagnet 3. It should be noted that the axial position sensor 59 and the axial position sensor 61 correspond to the first position sensor block and the second position sensor block, respectively. Then, the radial position sensor 7 is arranged to be sandwiched between the axial position sensor 59 and the axial position sensor 61.

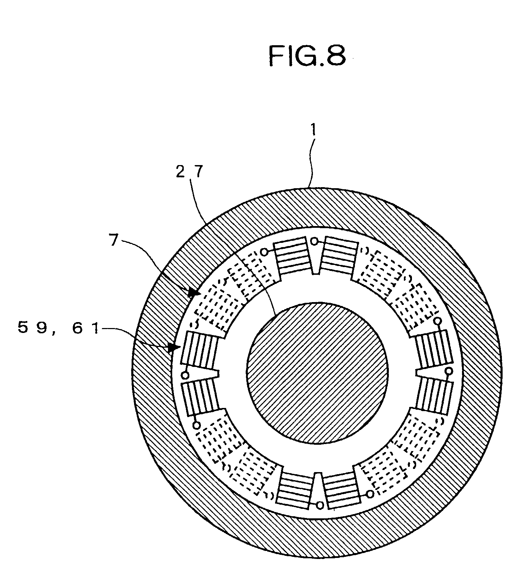

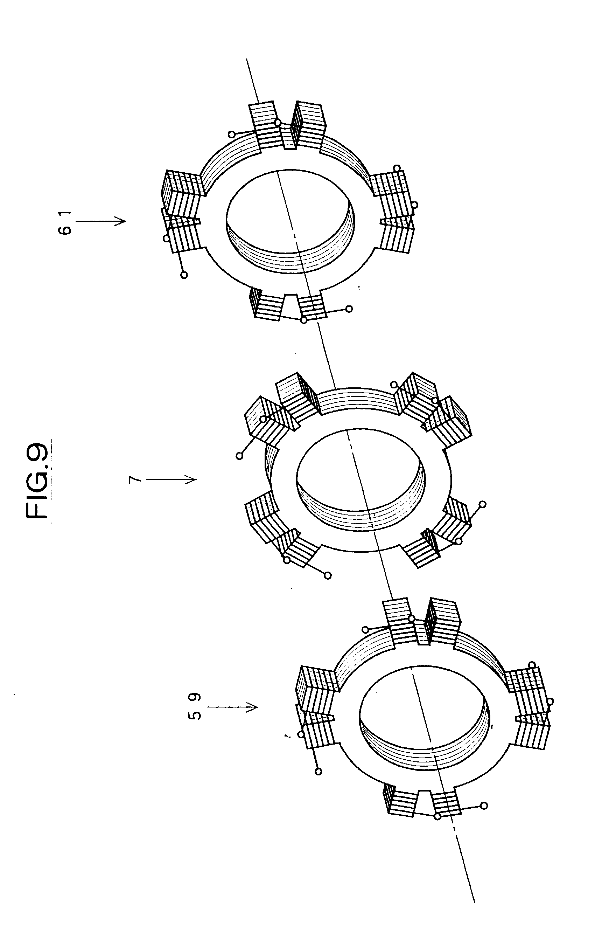

A detailed structural view of the axial position sensor 59, the axial position sensor 61 and the radial position sensor 7 is shown in Figs. 8 and 9. Fig. 8 is a frontal view of the axial position sensor 59, the axial position sensor 61 and the radial position sensor 7 as viewed from the front tip end of the sensor mounting shaft 27. Also, Fig. 9 is an exploded perspective view showing a state in which the axial position sensor 59, the axial position sensor 61 and the radial position sensor 7 are arranged in the axial direction.

Although, for the sake of illustration, the respective position sensors are depicted to be separated away from each other, as a matter of fact, it should be understood that the sensors are close to each other. As is apparent from Figs. 8 and 9, the axial position sensor 59 and the axial position sensor 61 are arranged so that their windings face each other. Also, the windings of the radial position sensor 7 are laid and offset by 45 degrees relative to the windings of the axial position sensor 59 and the axial position sensor 61.

In Fig. 8, the windings of the radial position sensor 7 are illustrated by dotted lines. The reason why the windings are offset by 45 degrees is that the magnetic fluxes do not interfere with each other and that the windings are laid at a high density with high efficiency. The difference is subtracted from the inductance change detected by the axial position sensor 59 and the axial position sensor 61 and this difference is converted into the axial displacement.

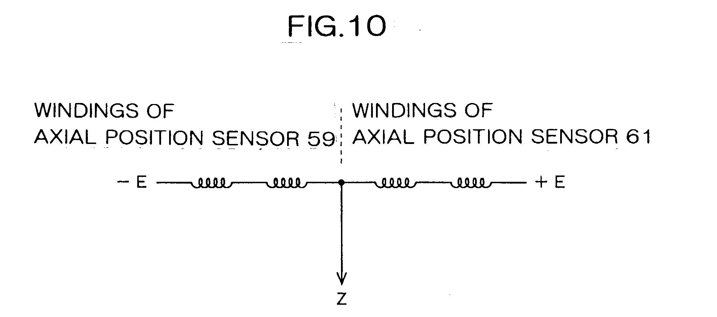

The state where the difference in change of inductance generated in the windings of the axial position sensor 59 and the axial position sensor 61 is taken is shown in Fig. 10. At this time, it is possible to offset the inductance change in accordance with the temperature change generated in the respective windings. Accordingly, it is possible to detect the axial position without any affect due to the temperature.

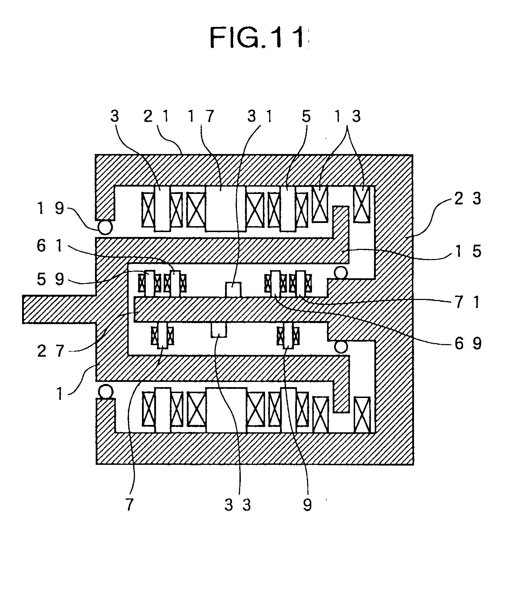

A sixth embodiment of the present invention will now be described with reference to Fig. 11. Incidentally, the same reference numerals as those of Figs. 1 and 14 are used to represent the same or like components or members and explanation therefor will be omitted.

In Fig. 11, an axial position sensor 69 and an axial position sensor 71 which have the same specifications as those of the axial position sensor 59 and the axial position sensor 61 are disposed away in the axial direction. The axial position sensor 59 and the axial position sensor 61 correspond to the first position sensor block. Also, the axial position sensor 69 and the axial position sensor 71 correspond to the second position sensor block. Thus, these two pairs of axial position sensors are arranged so that any length expansion may be measured when the rotor 1 expands due to heat.

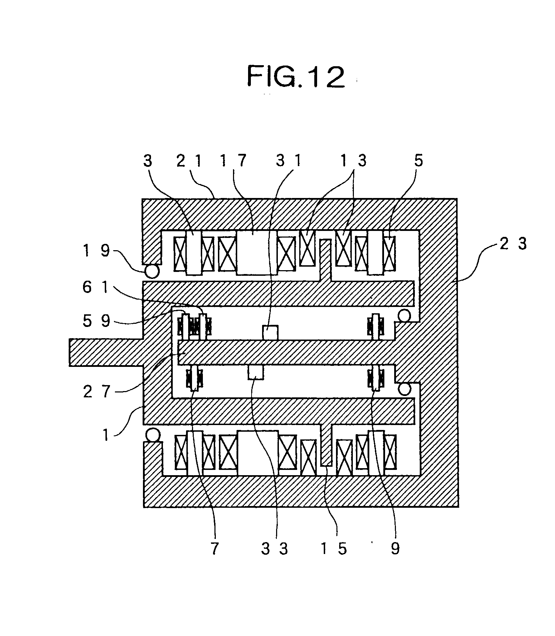

Incidentally, in the foregoing first to sixth embodiments, the metal disc 15 is disposed at the end portion of the rotor 1. However, as shown in Fig. 12, it is possible to dispose the metal disc in the midway of the rotor 1. At this time, for instance, the arrangement in the axial direction of the axial position controlling electromagnet 13 and the radial position controlling electromagnet 5 is reversed. Also, in the same manner, the arrangement of the motor 17 and the axial position controlling electromagnet 13 may be reversed. Also, as shown in Fiq. 13, instead of the motor 17, an axial gap type motor 63 may be mounted on the side end face 23 of the outer sleeve 21.

Incidentally, the axial gap type motor 63 may be realised by a motor for simultaneously performing a positional control in the axial direction and generating a rotational torque in a single rotating magnetic field. For example, (see Fifth "Control of Motion and Vibration" Symposium Lecture Papers, November 25 through 27, 1997, Hitachi, Japanese Mechanics Association (No. 97-31); and Japanese Patent Application Laid-Open No. Sho 61-185697. In this case, the metal disc 15, the axial position controlling electromagnet 13 and the axial position sensor 57 may be dispensed with. In the axial gap type motor 63, a stator having a three phase winding structure is disposed relative to the disc-like rotor in parallel to the upper surface side and the lower surface side of the rotor to thereby generate the rotating magnetic field (not shown). However, it is possible to use the stator that is disposed only on the lower surface side.

The axial gap type motor 63 is used to thereby further simplify the control and the structure. Then, it is possible to further shorten the axial length of the rotor shaft and to apply the bearing to a higher rotational speed type one.

Incidentally, the stationary bias magnetic field that is required for generating the bias attractive force may be obtained from permanent magnets. Also, it is possible to lift the rotor by super conduction.

The magnetic bearing according to the present invention may be applied to a spindle, a vacuum pump and a flywheel. Also, an angular sensor for detecting an angle of the rotor 1 is newly mounted and used as a servo motor so that the bearing may be applied to a protractor or a vibration removal base.

As described above, according to the present invention, it is possible to shorten the axial length of the rotor shaft and to increase the natural frequency. For this reason, it is possible to easily realize super high speed rotation.

Also, collocation is established, and even if the bearing takes the resilient vibration mode of the rotor due to the super high speed rotation, stable floating may be maintained.

Furthermore, since each position sensor may automatically perform temperature compensation, it is possible to use the bearing even under high temperature conditions.

Furthermore, the mass of the rotor is separated away from the center, and the invention may be applied to the flywheel.

Various details of the invention may be changed without departing from the scope of the present invention. Furthermore, the foregoing description of the embodiments according to the present invention is provided for the purpose of illustration only, and not for the purpose of limiting the invention as defined by the appended claims and their equivalents.

## Claims

1. A magnetic bearing comprising:
an outer sleeve (21);
a sensor mounting shaft (27) fixed to a central portion of a side end face (23) of said outer sleeve;
a motor (17) and at least one position controlling electromagnet (3,5) fixed to an inner wall of at least one of said outer sleeve and the side end face;
a hollow rotor (1) rotated by said motor and attracted for position alignment by said position controlling electromagnet; and
at least one position sensor (7,9) fixed to said sensor mounting shaft out of contact with said rotor inside said rotor for detecting at least one of an axial position and at least one radial position of said rotor.

2. The magnetic bearing according to claim 1, wherein a center position of said position controlling electromagnetic and a center position of said position sensor are aligned with each other in an axial direction.

3. The magnetic bearing according to claim 1 or 2, wherein said sensor mounting shaft is detachably fixed to the side end face of said outer sleeve by a mounting member.

4. The magnetic bearing according to any one of claims 1 to 3, wherein said position sensor for detecting the axial position is provided with a first position sensor block around which windings are wound in the radial direction and a second position sensor block having the same structure as that of said first position sensor block and fixed at a predetermined interval in the axial direction so that the windings corresponding to the respective windings of said first position sensor block face each other, and wherein a deviation in voltage generated between said second position sensor block and said first position sensor block is taken to thereby detect the axial position of said rotor.

5. The magnetic bearing according to any one of claims 1 to 4, wherein the position sensor for detecting the radial direction has windings radially wound and the windings symmetrically wound to sandwich said sensor mounting shaft are connected to form a bridge.

6. The magnetic bearing according to any one of the preceding claims, wherein a communication tube for passing a coolant and/or a cable is arranged in an interior of said outer sleeve and/or said sensor mounting shaft.

7. The magnetic bearing according to claim 4, wherein two position sensors for detecting the axial position are arranged at an interval and a deviation of outputs between said two position sensors is taken to measure any change of axial length due to thermal expansion of said rotor.

8. The magnetic bearing according to claim 4, wherein at least one out of said position sensors is embedded in said sensor mounting shaft.

9. The magnetic bearing according to claim 1, wherein said position sensor for detecting the axial position is disposed by utilizing a space between the side end face of said outer sleeve and said rotor.
